# FASCICULE DE BREVET EUROPEEN

(11) **EP 3 113 094 B1**
(45) Date de publication et mention de la délivrance du brevet: **20.11.2019**
(21) Numéro de dépôt: 16177645.5
(22) Date de dépôt: 01.07.2016
(51) Int. Cl.: G06Q 20/02, G06Q 20/20, G06Q 20/32, H04L 29/08

(54) **PROCÉDÉ DE TRAITEMENT DE DONNÉES TRANSACTIONNELLES, DISPOSITIF ET PROGRAMME CORRESPONDANT**
VERARBEITUNGSVERFAHREN VON TRANSAKTIONELLEN DATEN, VORRICHTUNG UND ENTSPRECHENDES PROGRAMM
METHOD FOR PROCESSING TRANSACTION DATA, DEVICE AND CORRESPONDING PROGRAM

(30) Priorité: 03.07.2015 FR 1556333
(43) Date de publication de la demande: 04.01.2017
(73) Titulaire: Ingenico Group, 75015 Paris (FR)
(72) Inventeur: QUENTIN, Pierre, 95880 ENGHIEN-LES-BAINS (FR); LEGER, Michel, 78100 SAINT-GERMAIN-EN-LAYE (FR)
(74) Mandataire: Vidon Brevets & Stratégie

(56) Documents cités:
- WO-A1-2014/162294
- WO-A2-2009/149164
- US-A1- 2013 246 259
- US-A1- 2013 304 651
- US-A1- 2014 337 230
- US-A1- 2015 154 597

## Description

### 1. Domaine

La présente technique se rapporte à la problématique du paiement en ligne. La présente technique se rapporte plus spécifiquement à la mise en œuvre d'un paiement dans la cadre d'une transaction de commerce électronique, également appelé « e-commerce ». La présente technique vise plus particulièrement à faciliter le paiement.

### 2. Art Antérieur

Une transaction e-commerce se caractérise par le fait qu'elle est mise en œuvre par l'intermédiaire d'un navigateur Internet accédant à une application serveur (typiquement une application de commerce électronique générant des données à destination du navigateur web). La transaction e-commerce, est dans la cadre de la présente, considérée comme identique à l'application de m-commerce. D'une manière générale, une transaction de e-commerce se différencie de la transaction m-commerce par le fait que la transaction de m-commerce met en œuvre une application particulière, installée sur un terminal de communication mobile (de type smartphone), et qui est utilisée à la fois pour effectuer des achats et à la fois pour effectuer une transaction de paiement.

Quoi qu'il en soit, une transaction e-commerce comprend actuellement une saisie, par l'utilisateur, de données permettant de réaliser un paiement. Ces données sont souvent des données de carte bancaire. Il s'agit par exemple du nom du porteur de la carte, du numéro de la carte (également appelé PAN), de la date d'expiration de celle-ci et d'un cryptogramme visuel. La plupart du temps, ces données sont saisies par l'utilisateur lors de la finalisation de l'achat. Par exemple, après validation d'un panier d'achat sur la plateforme du vendeur, l'utilisateur est transféré (transféré d'une page à l'autre dans le navigateur web) vers un serveur de paiement. C'est sur la page affichée par ce serveur de paiement que l'utilisateur saisit les données de sa carte bancaire. Éventuellement, en sus de ces données, le serveur de paiement peut, en conjonction avec un serveur bancaire, requérir la saisie d'une donnée complémentaire. Il peut par exemple s'agir d'un code généré par le serveur bancaire, sur la base du numéro de carte bancaire saisit par l'utilisateur. Ce code est par exemple transmis à l'utilisateur par l'intermédiaire d'un message (de type SMS) sur un dispositif séparé du dispositif utilisé par l'utilisateur pour réaliser le paiement (typiquement, le téléphone de l'utilisateur). Lorsque ce code est saisi, la transaction est finalisée entre le serveur de paiement, le serveur bancaire et le serveur du marchand.

Ce système général de paiement pose problème pour deux raisons. La première raison tient en la nécessité, pour l'utilisateur, de saisir les données de sa carte bancaire pour chaque paiement. On comprend que pour des raisons de sécurité, il est préférable que ces données soient saisies à chaque paiement. Cependant, ceci est contraignant et oblige l'utilisateur à sortir sa carte bancaire pour saisir ces informations. Pour pallier ce problème, il existe des solutions logicielles, comme les gestionnaires de mots de passe (par exemple DashLane™). Ces solutions logicielles, installées sur le dispositif de communication (l'ordinateur ou sur la tablette) de l'utilisateur, permettent de saisir automatiquement, dans les champs prévus à cet effet, les données qui ont été préalablement saisies dans le logiciel. Cependant, d'une part cela oblige à saisir ces données dans un logiciel tiers, qu'il faut au préalable installer sur le dispositif de communication de l'utilisateur; d'autre part, cette solution nécessite de faire confiance à l'éditeur de ce logiciel pour la conservation de ces données. Des solutions en ligne existent également : elles permettent de ne pas avoir à installer de logiciels sur dispositif de communication de l'utilisateur, mais elles nécessitent tout de même de faire confiance à un éditeur (par exemple Google™) pour la conservation de ces données. Or cette confiance a été grandement altérée ces dernières années. Par ailleurs, cette solution de préservation, au sein du dispositif de communication, des données de carte bancaire peut poser problème en cas de vol ou de perte du dispositif de communication.

Le deuxième problème est lié à la nécessité de saisir un code supplémentaire, transmis par exemple par SMS. Cette solution est mise en œuvre, justement, pour prévenir les abus liés aux vols ou pertes de cartes bancaires et/ou pour prévenir les abus liés aux vols ou pertes du dispositif de communication. Or il s'est avéré que cette solution fait chuter de manière importante le taux de transformation (i.e. le rapport entre le nombre d'achats effectués par rapport au nombre de visites). Cette solution n'est donc pas réellement plébiscitée par les sites marchands.

Le document US 2015/154597 A1 concerne des système et méthodes pour authentifier des transactions en utilisant un dispositif mobile. Parmi les différents modes de réalisation de ce document, un mode de paiement par l'intermédiaire d'un terminal de communication mobile est présenté. Un tel mode de paiement est cependant réalisé en mettant en œuvre un terminal de paiement chez un commerçant physique le terminal de paiement étant configuré pour interagir avec un serveur de paiement. Le document US015/154597 A1 n'enseigne pas, cependant, la réception, par un dispositif serveur de transaction, la réception d'une requête comprenant un identifiant d'un serveur marchand, ni l'obtention d'un paramètre de paiement permettant au terminal de communication de réaliser la transaction de paiement avec un serveur de paiement.

Le document US 2013/304651 A1 propose des éléments virtuels sécurisés dans des dispositifs mobiles. Le document US 2013/304651 A1 divulgue en particulier une méthode pour réaliser un paiement sécurisé avec un dispositif mobile comprenant un portefeuille mobile. Le dispositif mobile peut ainsi initialiser un paiement avec un terminal de paiement physique, chez un commerçant, avec un compte de paiement préalablement enregistré dans un élément virtuel sécurisé du dispositif mobile. Il n'enseigne pas, cependant, la réception, par un dispositif serveur de transaction, la réception d'une requête comprenant un identifiant d'un serveur marchand, ni l'obtention d'un paramètre de paiement permettant au terminal de communication de réaliser la transaction de paiement avec un serveur de paiement.

Le document WO 2014/162294 A1 propose des méthodes et systèmes permettant d'effectuer des transactions avec un dispositif mobile comprenant un identifiant enregistré dans une mémoire sécurisée. Dans ce document le dispositif requérant est un terminal de paiement qui ne peut clairement pas être considéré comme un serveur marchand au sens de la revendication 1. En outre, ce document ne divulgue pas que le serveur d'accès met en œuvre une étape d'obtention d'une donnée représentative d'un paramètre de paiement associé au serveur marchand.

Le document WO2009/149164 A2 propose une méthode de traitement de paiements électroniques. Dans ce document, un consommateur ayant choisi d'utiliser un fournisseur de moyens de paiement alternatif afin de régler ses achats, un serveur marchant transmet des informations relatives à la transaction de paiement à effectuer à une plateforme marchant universelle qui traite cette transaction avec le fournisseur de moyens de paiement alternatif sélectionné. Le serveur marchant reçoit une adresse URL de redirection qui permet ensuite au consommateur de fournir des informations de paiement additionnelles spécifiques au fournisseur de paiement alternatif. Le document WO2009/149164 A2 n'enseigne pas, cependant, la réception, par un dispositif serveur de transaction, la réception d'une requête comprenant un identifiant d'un serveur marchand, ni l'obtention d'un paramètre de paiement permettant au terminal de communication de réaliser la transaction de paiement avec un serveur de paiement.

Ainsi, ces documents ne sont pas en mesure d'apporter une solution à la mise en œuvre directe effectuée par un terminal de communication, avec un serveur de paiement, d'une transaction de paiement pour effectuer le paiement d'achats réalisés sur le serveur d'un marchand.

### 3. Résumé

La présente technique ne présente pas ces inconvénients de l'art antérieur. Plus particulièrement, la présente technique se rapporte à un procédé de traitement de données transactionnelles selon la revendication 1.

Ainsi, le dispositif électronique de traitement de transactions, également appelé serveur de transactions ou encore serveur transactionnel, est à même de réaliser une gestion optimisée des transactions. En effet, du fait de sa qualité de récepteur des requêtes de traitement des transactions en provenance des serveurs marchands (il est entendu que plusieurs serveurs marchands sont susceptibles de faire appel au dispositif de traitement de transaction), le dispositif de traitement de transaction peut aisément vérifier et valider les requêtes pour détecter d'éventuelles tentatives de fraude.

Ainsi, le terminal de communication est protégé des tentatives d'attaques. En effet, comme il se contente de recevoir des données paramétriques de manière dynamique (i.e. au moment de la réalisation de la transaction de paiement), il n'est pas obligé de stocker ces données de manière permanente et peut, lorsque la transaction est terminée, effacer ces données. Dès lors, une tentative d'attaque qui consisterait à tenter d'obtenir des données de connexion à un serveur de paiement seraient vouées à l'échec puisque le terminal de communication (ou a fortiori le composant sécurisé de ce terminal de communication) ne comprendrait aucune donnée permettant de le faire. Dans un mode de réalisation alternatif, la transmission des paramètres de connexion au serveur de paiement est réalisée par l'intermédiaire du serveur marchand. Dès lors, le serveur de transaction est libéré d'une tâche de transmission au terminal de communication. Il a ainsi une sorte de pare-feu qui est créé entre le serveur de transaction et le terminal de communication.

La requête de traitement de transaction comprenant une donnée représentative d'un identifiant du terminal de communication de l'utilisateur, par voie d'indirection, le serveur de transaction est à même d'identifier le terminal de communication qui joue le rôle de terminal de paiement pour cette transaction. Accessoirement, dans un mode de réalisation spécifique, le serveur de transaction peut également obtenir des données représentatives de ce terminal de communication à l'aide de cet identifiant. De telles données peuvent par exemple permettre de vérifier que le terminal de communication n'a pas été placé sur une liste noire de terminaux de communication non autorisé à effectuer des transactions. Il peut par exemple s'agir de terminaux de communication suspecté d'être des terminaux pirates.

La donnée représentative d'un identifiant du terminal de communication de l'utilisateur comprenant également un identifiant d'un composant de traitement de transactions du terminal de communication de l'utilisateur, le serveur de transaction peut également vérifier, toujours par voie d'indirection, le statut du composant de traitement de transactions.

Selon une caractéristique particulière, le procédé comprend en outre une étape d'obtention d'une donnée représentative d'un numéro de transaction.

Ainsi, le dispositif électronique de traitement de transactions est l'ordonnanceur des transactions, à réaliser sur le serveur de paiement. Il gère donc de manière optimisée le traitement des transactions en fonction des différents serveurs de paiement à sa disposition. Dans un mode de réalisation particulier, il est à même par exemple de sélectionner, parmi une pluralité de serveurs de paiement, le serveur de paiement qui est en charge de traiter une transaction particulière. Par ailleurs, lorsqu'un seul serveur de paiement est disponible, le serveur de transaction s'assure que le serveur de paiement traite les transactions dans l'ordre qui lui est fourni.

Selon une caractéristique particulière, ladite étape d'obtention d'une donnée représentative d'un paramètre de paiement comprend une étape de recherche, au sein d'une structure de données, d'au moins un paramètre associé audit serveur marchand.

Ainsi, le paramétrage ultérieur du terminal de communication ne dépend pas de données fournies par le marchand, mais de données qui sont obtenues par le serveur de transactions. Dès lors, la modification de ces données ne peut pas être faite à la volée, par exemple en interceptant et modifiant des paramètres qui seraient directement transmis par le marchand.

Par ailleurs, comme seul l'identifiant du marchand est transmis au serveur de transaction, une tentative de fraude qui consisterait à modifier l'identifiant du marchand (en vue de créditer un compte bancaire différent du compte bancaire du marchand) serait également vouée à l'échec, car il faudrait que le fraudeur dispose également de paramètres accessibles directement par l'intermédiaire du serveur de transaction. Si cela devait se produire, le fraudeur serait alors directement identifiable et placé sur liste noire.

Selon une caractéristique particulière, le procédé comprend en outre une étape de transmission d'une donnée de confirmation, à destination du serveur marchand.
Selon un autre aspect, il est également décrit un système de traitement de transactions, apte à effectuer un traitement de données transactionnelles selon la revendication 5. transactions. Dès lors, la modification de ces données ne peut pas être faite à la volée, par exemple en interceptant et modifiant des paramètres qui seraient directement transmis par le marchand.

Par ailleurs, comme seul l'identifiant du marchand est transmis au serveur de transaction, une tentative de fraude qui consisterait à modifier l'identifiant du marchand (en vue de créditer un compte bancaire différent du compte bancaire du marchand) serait également vouée à l'échec, car il faudrait que le fraudeur dispose également de paramètres accessibles directement par l'intermédiaire du serveur de transaction. Si cela devait se produire, le fraudeur serait alors directement identifiable et placé sur liste noire.

Selon une caractéristique particulière, le procédé comprend en outre une étape de transmission d'une donnée de confirmation, à destination du serveur marchand.

Selon un autre aspect, il est également décrit un dispositif électronique de traitement de transactions, apte à effectuer un traitement de données transactionnelles, lesdites données étant représentatives d'un paiement entre un utilisateur et un marchand. Un tel dispositif comprend :
- des moyens de réception d'une requête de traitement de transaction en provenance d'un serveur marchand ;
- des moyens d'obtention d'une donnée représentative d'un paramètre de paiement associé audit serveur marchand ;
- des moyens de transmission, à un serveur de paiement, d'une requête de traitement de paiement.

Il comprend également, en fonction des modes de réalisation, tous les autres moyens pour la mise en œuvre des étapes décrites précédemment.

Selon une implémentation préférée, les différentes étapes des procédés selon la technique proposée sont mises en œuvre par un ou plusieurs logiciels ou programmes d'ordinateur, comprenant des instructions logicielles destinées à être exécutées par un processeur de données d'un module relais selon la technique proposée et étant conçu pour commander l'exécution des différentes étapes des procédés.

En conséquence, la technique proposée vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La technique proposée vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la technique proposée est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de la technique proposée.

### 4. Figures

D'autres caractéristiques et avantages de la technique proposée apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique de la technique proposée, du point de vue du serveur de traitement de transaction ;
- la figure 2 décrit brièvement l'architecture physique du serveur de traitement de transaction.

### 5. Description

Comme exposé préalablement, l'objet de la présente est de faciliter le paiement en assurant que celui-ci puisse être fait de manière simple et sécurisée. Plus particulièrement, le paiement est réalisé en mettant en œuvre, au sein d'un terminal de communication, un composant de traitement de transaction, sécurisé, qui agit comme un terminal de paiement multi marchand. Ainsi, la solution de l'invention apporte une sécurité accrue des transactions réalisées tout en évitant que l'utilisateur soit dans l'obligation de saisir des données, notamment de carte bancaire, au moment du paiement.

On rappelle, à toute fin utile, que dans une utilisation classique, un terminal de paiement se présente sous la forme d'un dispositif, installé physiquement chez un commerçant, dispositif qui permet de recevoir des paiements de la part des clients qui utilisent une carte de paiement. De plus en plus de commerçants disposent de terminaux de paiement multi technologies, qui acceptent à la fois un paiement par carte à puce, un paiement par carte magnétique et un paiement par carte sans contact. Le terminal de paiement classique est configuré pour fonctionner avec un commerçant uniquement : cela signifie que le terminal de paiement comprend une configuration, non modifiable par lui. Cette configuration comprend un certain nombre de paramètres que sont par exemple des identifiants bancaires (permettant de se connecter ou encore de certifier des échanges avec l'établissement bancaire du commerçant) ou encore des paramètres de connexions à des serveurs. *Ainsi, intrinsèquement, un terminal de paiement classique est lié au commerçant et pas au client.*

L'approche de la technique proposée est toute autre : il s'agit de disposer d'un composant de traitement de transaction, sécurisé, qui joue le rôle d'un terminal de paiement qui est multi marchand. Le composant, qui est installé au sein du terminal de communication de l'utilisateur, offre des capacités de traitement multi marchand car il est configurable : ce composant permet en quelque sorte de transformer le terminal de communication de l'utilisateur en un terminal de paiement le temps de la transaction de paiement. Dès lors, il est possible, avec la technique proposée, de réaliser des transactions de paiement, à distance (c'est-à-dire des transactions de e-commerce) sans avoir à saisir ou préenregistrer dans un logiciel externe, ses données bancaires.

Dans un mode de réalisation, le composant de traitement de transaction (composant sécurisé) est un composant qui dispose ou qui utilise une interface de communication sans contact : cette interface permet à l'utilisateur d'utiliser une carte de paiement sans contact : du point de vue de l'utilisateur, le paiement est réalisé en appliquant ou en approchant sa carte de paiement sans contact à proximité d'une zone prédéfinie du terminal de communication. L'expérience de paiement est donc grandement facilitée pour le client.

Du point de vue du marchand, le taux de transformation est maximisé : en effet, l'expérience de paiement étant facilitée, le risque de perte d'un client lors de l'opération de paiement diminue d'autant.

La technique proposée, quoi qu'il en soit, ne porte pas sur un composant sécurisé destiné à être utilisé au sein d'un terminal de communication, mais sur l'utilisation particulière d'un ensemble de moyens mis en œuvre au sein d'un ou plusieurs réseaux de communication pour permettre une mise en œuvre d'un paiement.

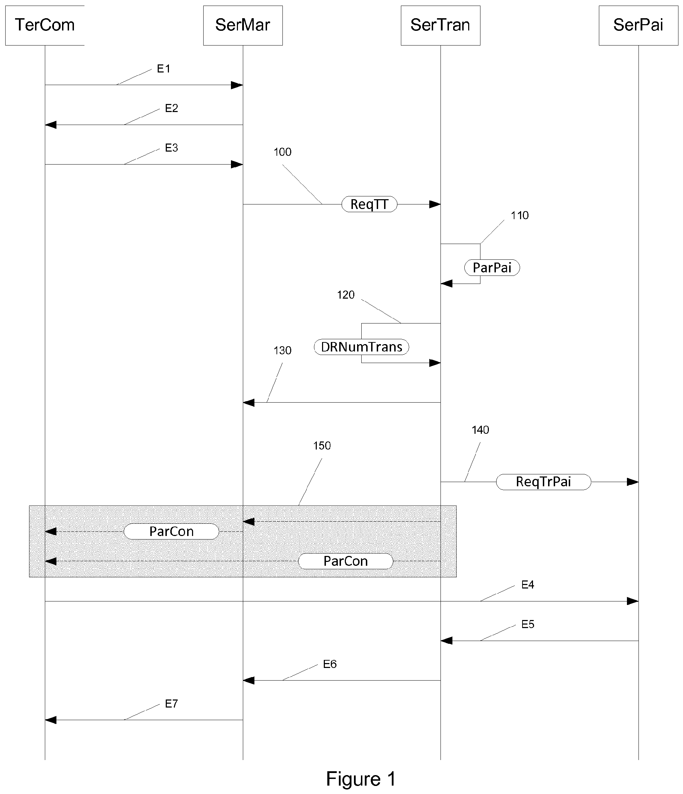

Plus particulièrement, la technique proposée porte sur la mise en œuvre du paiement par un serveur qui est à même de configurer, à la volée, le composant sécurisé du terminal de communication, afin de lui permettre de réaliser le paiement directement auprès du serveur de paiement. Du point de vue de ce serveur, la technique mise en œuvre est la suivante, décrite en relation avec la figure 1. Il s'agit de réaliser un traitement de données transactionnelles représentatives d'un paiement entre un utilisateur (U) et un marchand (M). Le procédé est mis en œuvre par un dispositif électronique de traitement de transactions (le serveur) situé au sein d'un réseau de communication. La méthode, selon le dispositif de traitement de transaction, comprend :
- une étape de réception (100) d'une requête de traitement de transaction (ReqTT) en provenance d'un serveur marchand (SerMar) ; cette requête peut comprendre, selon les conditions opérationnelle, une données représentative d'un identifiant du serveur marchand ;
- une étape d'obtention (110) d'une donnée représentative d'un paramètre de paiement (ParPai) associé audit serveur marchand (SerMar) ; ces paramètres sont obtenus par exemple en utilisant l'identifiant du serveur marchand afin d'effectuer une recherche au sein d'une base de données de paramètres de paiements ;
- une étape d'obtention (120) d'une donnée représentative d'un numéro de transaction (DRNumTrans) ; cette étape est optionnelle du point de vue du serveur : en effet le numéro de transaction peut être fourni par d'autre biais, sans que le serveur soit nécessairement informé de ce numéro ;
- une étape de transmission (130) d'une donnée de confirmation, à destination du serveur marchand (SerMar) ; cette étape est optionnelle du point de vue du serveur de traitement : en effet cette confirmation peut également être transmise par d'autres biais sans que le serveur de traitement en soit nécessairement informé ;
- une étape de transmission (140), à un serveur de paiement (SerPai), d'une requête de traitement de paiement (ReqTrtPai) ;
- une étape de transmission (150), à un terminal de communication de l'utilisateur, d'une donnée représentative de paramètres de connexion (ParCon) au serveur de paiement (SerPai) ; cette étape est soit mise en œuvre directement par le serveur de traitement de transaction, soit mise en œuvre par indirection, en utilisant le serveur marchand.

Préalablement à la mise en œuvre de la méthode, le serveur marchand (Sermar) reçoit (E1) de la part du terminal de communication (TerCom), une requête de paiement (l'utilisateur souhaite effectuer le paiement). En réponse à cette requête, le serveur marchand effectue (E2) une vérification de la présence d'un composant sécurisé. Le terminal transmet (E3) donnée indiquant la présence ou non du composant sécurisé sur le terminal de communication (TerCom).

On comprend, bien entendu, que la plupart des échanges réalisés entre les serveurs et le composant sécurisé sont chiffrés et que les clés de chiffrement symétriques ou asymétriques utilisées sont des éléments à disposition de ces différentes entités.

Comme indiqué, le serveur marchand transmet la requête de traitement de transaction (ReqTT) au serveur de transaction. Une telle transmission est possible car le serveur marchand est le serveur qui effectue la vérification de la présence du composant sécurisé sur le terminal de communication de l'utilisateur. En effet, au moment du paiement, le serveur marchand, à l'aide d'une application de paiement spécifique (« checkout application »), tente de vérifier la présence du composant sécurisé sur le terminal de communication de l'utilisateur. Lorsque cette tentative aboutit à la détection, le serveur marchand transmet la requête de traitement de transaction (ReqTT) au serveur de transaction. Lorsque cette tentative n'aboutit pas à la détection du composant, alors le serveur marchand met en œuvre un processus de paiement classique consistant à rediriger l'utilisateur sur une page web d'un serveur bancaire afin que l'utilisateur puisse saisir ses données de carte bancaire.

La détection de la présence du composant sécurisé sur le terminal de communication de l'utilisateur peut s'accompagner de l'obtention, par le serveur marchand, d'un identifiant correspondant de ce composant sécurisé. Cet identifiant est fourni par le fabriquant du composant sécurisé. Il permet d'identifier celui-ci de manière unique parmi l'ensemble des composants sécurisés existant. Il permet par ailleurs, comme cela est explicité par la suite, de surveiller l'état de fonctionnement de ce composant sécurisé. Par ailleurs, la détection de la présence du composant sécurisé sur le terminal de communication de l'utilisateur est éventuellement précédée ou accompagnée de l'obtention d'une adresse de communication réseau du terminal de communication. Par exemple, le serveur marchand peut obtenir l'adresse IP (de l'anglais pour « Internet Protocol »). Une telle adresse est utile, dans le cadre de la présente technique, car elle permet au serveur de traitement de transaction (auquel cette adresse est transmise par le serveur marchand) de disposer d'une localisation (réseau) du terminal de communication. Le serveur de traitement de transaction peut alors effectuer deux opérations, éventuellement optionnelles (en fonction des mises en œuvre opérationnelles de la présente technique) :
- le serveur de traitement de transaction peut entrer directement en contact avec le terminal de communication afin de vérifier, par exemple, que le composant sécurisé fonctionne correctement et n'a pas subi ou ne subit pas d'attaque de la part d'un programme, d'une personne ou d'un autre composant ;
- le serveur de traitement de transaction peut fournir, au terminal de communication, les paramètres de connexion au serveur de paiement ;
- Le serveur de traitement de transaction peut vérifier la localisation réelle du terminal de communication (sur la base de l'adresse IP, une localisation réelle plus ou moins précise peut être obtenue) : le serveur peut alors placer le terminal de communication de l'utilisateur sur une liste noire si la localisation du terminal de communication de l'utilisateur est différente d'une localisation attendue par le serveur de traitement de transaction ;
- Le serveur de traitement de transaction peut également obtenir l'identifiant du composant sécurisé (si cet identifiant l'est pas déjà fourni par le serveur marchand).

En tout état de cause, avant de mener les opérations nécessaires à la finalisation de la transaction de paiement, le serveur de traitement de transaction peut communiquer avec le serveur marchand afin de déterminer la fiabilité du composant sécurisé et la capacité de ce composant à mener correctement une transaction de paiement. Les différentes étapes mise en œuvre à cette fin de vérification peuvent comprendre d'autres étapes que celles explicitées précédemment.

Les vérifications et recherches de paramètres effectuées par le serveur de traitement de transactions mettent en œuvre des structures de données de stockage de paramètres et ou de valeur. De telles structures peuvent se présenter sous la forme de base de données ou de fichiers.

Lorsque le serveur de traitement de transaction décide de la mise en œuvre de la transaction par l'intermédiaire du composant sécurisé, le serveur met alors en œuvre des étapes permettant d'une part de préparer le composant sécurisé pour qu'il agisse comme un terminal de paiement du marchand (i.e. un terminal de paiement associé au marchand) et d'autre part d'informer le serveur bancaire de la mise en œuvre d'une transaction de paiement à venir.

La préparation du composant sécurisé nécessite l'obtention d'une donnée représentative d'un paramètre de paiement associé audit serveur marchand. Il peut s'agir typiquement de données d'identification du marchand et/ou de clés de chiffrement associées au marchand. Il peut également s'agir de données relatives à un compte bancaire du marchand, compte sur lequel le montant de la transaction doit être crédité. Le composant reçoit également une adresse IP du serveur bancaire auquel il doit se connecter. Cette adresse IP peut être fournie dans un second temps, une fois que le composant sécurisé est en mesure d'établir une liaison sécurisée avec le serveur de traitement de transaction ou une fois que le serveur de traitement de transaction a sélectionné le serveur de paiement qui doit effectuer cette transaction.

On rappelle que le composant sécurisé du terminal de communication est vierge de toute information de paiement préalablement à la réception de données en provenance du serveur. Ce composant sécurisé doit donc, avant chaque transaction, recevoir des données afin qu'il puisse se comporter comme un terminal de paiement physique. On précise également que la fin de la transaction de paiement (i.e. la confirmation de la prise en compte du paiement par le serveur de paiement) implique la destruction des données reçues par le composant sécurisé. En définitive, à la fin de la transaction, le composant sécurisé retrouve son état initial. Afin de permettre une communication sécurisée, le composant sécurisé dispose cependant, de manière permanente ou semi permanente une ou plusieurs clés (clés publiques et/ou clés privées) permettant de mener des échanges sécurisés soit avec les serveurs marchands soit avec le serveur de traitement de transaction.

En fonction des modes de réalisation et de la mise en œuvre opérationnelle de la présente technique, la configuration du composant sécurisée est mise en œuvre soit directement par le serveur de traitement de transaction (qui prend alors en charge cette tâche en se passant de l'intervention du serveur marchand), soit par voie d'indirection. Le serveur de traitement de transaction transmet alors au serveur marchand les données nécessaires à la configuration du composant sécurisé, le serveur marchand retransmet par la suite ces données au composant sécurisé (en utilisant l'interface physique de communication du terminal de communication).

Les deux approches présentent des avantages : dans la première approche, on élimine l'intervention d'un acteur (le serveur marchand) et on renforce donc la sécurité de la transaction. Dans la deuxième approche, on réduit les besoins de traitement du serveur de traitement de transaction qui n'a pas besoin de disposer des ressources importantes nécessaires à la communication avec une nombre très important de terminaux de communication.

Pour informer le serveur bancaire qu'il va traiter une transaction, le serveur de traitement de transaction transmet une requête à celui-ci. Cette requête comprend de manière optionnelle un identifiant de transaction (comme par exemple le numéro de transaction). Cette requête comprend également l'identifiant du composant sécurisé du terminal de communication. Éventuellement, d'autres données peuvent être fournies, comme l'adresse IP du terminal de communication de l'utilisateur afin que le serveur de paiement soit à même d'accepter ou non une transaction en provenance de ce terminal de communication.

Préalablement à la transmission de ces données, sous forme d'une requête, au serveur de transaction, le serveur de traitement de transaction obtient un numéro de transaction à traiter. Le numéro de transaction est un identifiant qui permet d'associer ensemble les données de la transaction. Il s'agit d'un identifiant pérenne : l'identifiant et les données associées sont conservées, par exemple dans une ou plusieurs bases de données pour une exploitation ultérieure de ces données (par exemple à titre de preuve). L'identifiant de transaction est soit directement généré par le serveur de traitement de transaction, soit obtenu auprès d'un autre serveur ou service. Cette mise en œuvre dépend des conditions opérationnelles et n'est pas détaillée.

Une fois muni de ces données, le serveur bancaire est en mesure d'une part d'accepter ou non une connexion en provenance du terminal de communication (en effectuant par exemple une vérification de l'adresse d'origine des requêtes transmises par le terminal de communication) et d'autre part de vérifier que le composant sécurisé qui souhaite valider la transaction correspond bien au composant sécurisé préalablement identifié Le serveur de paiement prépare les instances logicielles nécessaires au traitement de la transaction et se met en attente de la requête en provenance du composant sécurisé

Préalablement à la transmission de cette requête, le serveur de traitement de transaction peut également effectuer un choix d'un serveur de paiement lorsque plusieurs serveurs de paiement sont disponibles pour traiter la requête. Ainsi, le serveur de traitement de transaction est à même de répartir, de manière efficace, la charge pesant sur ces serveurs de paiement.

Lorsque la préparation du composant sécurisé et du serveur de paiement est effectuée, le serveur de traitement de transaction se met en attente de la réception (E5) (éventuelle) d'une confirmation de paiement en provenance du serveur de paiement.

L'acte de paiement (E4), figure 1, en lui-même, est réalisé par l'utilisateur, qui appose sa carte de paiement sans contact à un emplacement spécifié de son terminal de communication afin que le composant sécurisé puisse récupérer les données de la carte de paiement et transmettre ces données au serveur de paiement pur qu'il effectue le paiement).

Préalablement ou postérieurement à la réception d'une telle confirmation, il peut également transmettre (E6) lui-même une confirmation de fin de traitement de transaction au serveur marchand afin que celui-ci puisse par exemple rediriger (E7) le navigateur web du terminal de communication vers une page de fin de transaction, synonyme pour l'utilisateur, que le traitement de paiement est terminé.

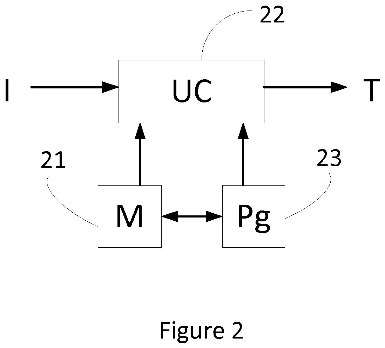

On décrit, en relation avec la figure 2, un dispositif comprenant des moyens permettant l'exécution du procédé décrit préalablement. Un tel dispositif prend par exemple la forme d'un serveur de traitement de transaction.

Par exemple, le dispositif comprend une mémoire 21 constituée d'une mémoire tampon, une unité de traitement 22, équipée par exemple d'un microprocesseur, et pilotée par le programme d'ordinateur 23, mettant en œuvre les étapes nécessaires au traitement des transactions, en indirection, entre le serveur marchand, le composant sécurisé et le serveur de paiement.

À l'initialisation, les instructions de code du programme d'ordinateur 23 sont par exemple chargées dans une mémoire avant d'être exécutées par le processeur de l'unité de traitement 22. L'unité de traitement 22 reçoit en entrée par exemple une requête de traitement de transaction en provenance d'un serveur marchand. Le microprocesseur de l'unité de traitement 22 met en œuvre les étapes du procédé traitement, selon les instructions du programme d'ordinateur 23 pour effectuer une préparation de la transaction auprès du composant sécurisé, une préparation d'un serveur de paiement.

Pour cela, le dispositif comprend, outre la mémoire tampon 21, des moyens de d'obtention de données de configuration, éventuellement un processeur de chiffrement et des moyens de communications, tels que des modules de communication réseau, permettant la transmission et la réception de données. Ces moyens peuvent être pilotés par le processeur de l'unité de traitement 22 en fonction du programme d'ordinateur 23. Ces moyens se présentent également sou la forme de modules, logiciels ou matériels, spécifiquement ou non dédiés à la mise en œuvre de la présente technique. Par ailleurs, le processeur en charge peut être un processeur sécurisé permettant de se prémunir contre une attaque durant les phases de chiffrement ou de déchiffrement.

La technique se rapporte également à un terminal de paiement multi-marchands, tel que décrit précédemment. Un tel terminal de paiement multi-marchands se présente sous diverses formes. Dans une forme simple, un tel terminal comprend une interface de communication réseau. Cette interface permet au terminal de paiement de recevoir des données en provenance de serveurs, dont le serveur marchand et le serveur de transaction. Une telle interface peut être une interface indépendante ou une interface gérée par un dispositif au sein duquel le terminal de paiement est installé ou connecté. Dans cette même forme simple, le terminal de paiement comprend une interface de communication sans contact. Une telle interface de communication sans contact permet de transmettre un signal à destination d'une carte de paiement (ou à un terminal de communication NFC) afin que cette dernière, en réponse, émette les données nécessaires au paiement. Cette interface de communication sans contact peut être une interface indépendante ou une interface gérée par un dispositif au sein duquel le terminal de paiement est installé ou connecté. Dans un mode de réalisation distribué, qui est celui qui a été décrit précédemment, le terminal de paiement multi-marchand est donc composé d'un ensemble comprenant le composant sécurisé et des interfaces de communication emprunté au terminal de communication au sein duquel le composant sécurisé est installé.

La technique se rapporte également à un procédé de gestion d'un paiement, mis en œuvre par un terminal de paiement multi-marchands tel que décrit précédemment. Un tel procédé comprend, du point de vue de ce terminal, une étape de transmission de au serveur marchand, d'une requête de paiement (l'utilisateur souhaite effectuer le paiement). En réponse à cette requête, le serveur marchand effectue une vérification de la présence d'un composant sécurisé (i.e. de la présence du terminal de paiement multi-marchands) : le terminal de communication reçoit une requête de vérification de la présence du composant sécurisé. Le terminal (de communication ou de paiement) transmet donnée indiquant la présence du composant sécurisé sur le terminal de communication.

Le terminal de paiement (ou le terminal de communication) reçoit ensuite une donnée représentative de paramètres de connexion *(ParCon)* au serveur de paiement *(SerPai).* Cette réception déclenche l'auto configuration du terminal de paiement multi-marchands. Au moment de cette autoconfiguration, le terminal de paiement multi-marchands devient un terminal dédié uniquement au marchand pour lequel le paiement doit être réalisé. Les interfaces de communication réseau et sans contact sont alors exclusivement sous le contrôle du processeur sécurisé afin de mettre en œuvre le paiement. Lorsque ces interfaces de communication réseau et sans contact sont partagées avec un terminal de communication, l'autoconfiguration comprend un processus de blocage de ces interfaces au bénéfice du processeur sécurisé.

Le processeur sécurisé reçoit ensuite, en provenance de l'interface sans contact, des données nécessaires au paiement (numéro de carte bancaire, nom, date d'expiration etc.) et transmet ces informations, ainsi que des données complémentaires propre à la transaction de paiement, au serveur de paiement. Lors de ces étapes de réception des données de l'interface NFC et de construction et de transmission de la transaction au serveur de paiement, le terminal de paiement utilise les paramètres de connexion et de configuration reçus précédemment.

Lorsque la transaction est validée, le terminal de communication reçoit ensuite les données de confirmation en provenance du serveur marchand. Le processeur sécurisé se sépare alors des données de configuration et réacquiert la possibilité de réaliser un paiement pour un autre marchand lors d'une prochaine transaction.

## Revendications

1. Procédé de traitement de données transactionnelles (SerTran) représentatives d'un paiement entre un utilisateur (U) et un marchand (M), procédé mis en œuvre par un dispositif électronique de traitement de transactions situé au sein d'un réseau de communication, dispositif faisant l'interface entre un serveur marchand (SerMar) et un serveur de paiement (SerPai), le procédé comprenant :
- une étape de réception (E1) d'une requête de paiement en provenance du terminal de communication de l'utilisateur,
- une étape de vérification (E2) d'une présence d'un composant de traitement de transactions du terminal de communication de l'utilisateur,
- une étape de transmission (E3) par le terminal de communication de l'utilisateur d'une donnée indiquant la présence du composant de traitement de transactions, comprenant un identifiant dudit composant de traitement de transactions ; et
lorsque le composant de traitement de transaction est présent :
- une étape de réception (100) d'une requête de traitement de transaction (ReqTT) en provenance du serveur marchand (SerMar), ladite requête de traitement comprenant un identifiant du serveur marchand (SerMar) et l'identifiant du composant de traitement de transactions du terminal de communication de l'utilisateur;
- une étape d'obtention (110) d'une donnée représentative d'un paramètre de paiement (ParPai) associé audit serveur marchand (SerMar), en fonction de l'identifiant du serveur marchand (SerMar) ;
- une étape de transmission (140), au serveur de paiement (SerPai), d'une requête de traitement de paiement (ReqTrtPai) comprenant l'identifiant dudit composant de traitement de transactions ;
- une étape de transmission (150), audit composant de traitement de transactions du terminal de communication de l'utilisateur de données de configuration comprenant ladite donnée représentative d'un paramètre de paiement (ParPai) associé audit serveur marchand (SerMar) et d'une donnée représentative de paramètres de connexion au serveur de paiement (SerPai) ;
- une étape de réalisation de la transaction de paiement entre le composant de traitement de transactions du terminal de communication et le serveur de paiement (SerPai), en fonction des données reçues au cours de l'étape de transmission, comprenant une étape de vérification que le composant de traitement de transactions qui souhaite valider la transaction correspond au composant de traitement de transaction préalablement identifié auprès du serveur de paiement.

2. Procédé de traitement selon la revendication 1, **caractérisé en ce qu'**il comprend en outre une étape d'obtention (120) d'une donnée représentative d'un numéro de transaction (DRNumTrans).

3. Procédé de traitement selon la revendication 1, **caractérisé en ce que** ladite étape d'obtention (110) d'une donnée représentative d'un paramètre de paiement (ParPai) comprend une étape de recherche, au sein d'une structure de données, d'au moins un paramètre associé audit serveur marchand.

4. Procédé de traitement selon la revendication 1, **caractérisé en ce qu'**il comprend en outre une étape de transmission (130) d'une donnée de confirmation, à destination du serveur marchand (SerMar).

5. Système électronique de traitement de transactions, apte à effectuer un traitement de données transactionnelles, comprenant un dispositif faisant l'interface entre un serveur marchand (SerMar) et un serveur de paiement (SerPai), lesdites données étant représentatives d'un paiement entre un utilisateur (U) et un marchand (M), système **caractérisé en ce qu'**il comprend :
- des moyens de réception (E1) d'une requête de paiement en provenance du terminal de communication de l'utilisateur,
- des moyens de vérification (E2) d'une présence d'un composant de traitement de transactions du terminal de communication de l'utilisateur,
- des moyens de transmission (E3) par le terminal de communication de l'utilisateur d'une donnée indiquant la présence du composant de traitement de transactions, comprenant un identifiant dudit composant de traitement de transactions ; et
lorsque le composant de traitement de transaction est présent, la mise en œuvre :
- de moyens de réception (100) d'une requête de traitement de transaction (ReqTT) en provenance du serveur marchand (SerMar), ladite requête de traitement comprenant un identifiant du serveur marchand (SerMar) et l'identifiant du composant de traitement de transactions du terminal de communication de l'utilisateur;
- des moyens d'obtention (110) d'une donnée représentative du paramètre de paiement (ParPai) associé audit serveur marchand (SerMar) en fonction d'un identifiant du serveur marchand (SerMar) ;
- des moyens de transmission (140), au serveur de paiement (SerPai), d'une requête de traitement de paiement (ReqTrtPai), comprenant l'identifiant dudit composant de traitement de transaction,
- des moyens de transmission (150), audit composant de traitement de transactions du terminal de communication de l'utilisateur, de données de configuration comprenant ladite donnée représentative d'un paramètre de paiement (ParPai) associé audit serveur marchand (SerMar) et d'une donnée représentative de paramètres de connexion au serveur de paiement (SerPai) ;
- des moyens de réalisation de la transaction de paiement entre le composant de traitement de transactions du terminal de communication et le serveur de paiement (SerPai), en fonction des données reçues au cours de l'étape de transmission, en fonction des données reçues au cours de l'étape de transmission, comprenant des moyens de vérification que le composant de traitement de transactions qui souhaite valider la transaction correspond au composant de traitement de transaction préalablement identifié auprès du serveur de paiement.

6. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de traitement de données transactionnelles selon la revendication 1, lorsqu'il est exécuté sur un ordinateur.

## Patentansprüche

1. Verfahren zum Verarbeiten von Transaktionsdaten (SerTran), die für eine Zahlung zwischen einem Benutzer (U) und einem Händler (M) repräsentativ sind, Verfahren, das durch eine elektronische Vorrichtung zur Transaktionsverarbeitung umgesetzt wird, die sich in einem Kommunikationsnetzwerk befindet, Vorrichtung, die als Schnittstelle zwischen einem Händlerserver (SerMar) und einem Zahlungsserver (SerPai) fungiert, wobei das Verfahren aufweist:
- einen Schritt des Empfangens (E1) einer Zahlungsanforderung von dem Kommunikationsendgerät des Benutzers,
- einen Schritt des Überprüfens (E2) einer Anwesenheit einer Transaktionsverarbeitungskomponente des Kommunikationsendgeräts des Benutzers,
- einen Schritt des Übertragens (E3) eines Datums, das das Vorhandensein der Transaktionsverarbeitungskomponente angibt, umfassend eine Kennung der Transaktionsverarbeitungskomponente, durch das Kommunikationsendgerät des Benutzers und,
wenn die Transaktionsverarbeitungskomponente vorhanden ist:
- einen Schritt des Empfangens (100) einer Transaktionsverarbeitungsanforderung (ReqTT) von dem Händlerserver (SerMar), wobei die Verarbeitungsanforderung eine Kennung des Händlerservers (SerMar) und die Kennung der Transaktionsverarbeitungskomponente des Kommunikationsendgeräts des Benutzers aufweist,
- einen Schritt des Erhaltens (110) eines Datums, das für einen Zahlungsparameter (ParPai) repräsentativ ist, der dem Händlerserver (SerMar) zugeordnet wird, in Abhängigkeit von der Kennung des Händlerservers (SerMar),
- einen Schritt des Übertragens (140) an den Zahlungsserver (SerPai) einer Zahlungsverarbeitungsanforderung (ReqTrtPai), umfassend die Kennung der Transaktionsverarbeitungskomponente,
- einen Schritt des Übertragens (150) an die Transaktionsverarbeitungskomponente des Kommunikationsendgeräts des Benutzers von Konfigurationsdaten, umfassend das Datum, das für einen Zahlungsparameter (ParPai) repräsentativ ist, der dem Händlerserver (SerMar) zugeordnet wird, und eines Datums, das für Anschlussparameter an den Zahlungsserver (SerPai) repräsentativ ist,
- einen Schritt des Ausführens der Zahlungstransaktion zwischen der Transaktionsverarbeitungskomponente des Kommunikationsendgeräts und dem Zahlungsserver (SerPai) in Abhängigkeit von den Daten, die während des Schritts des Übertragens empfangen werden, umfassend einen Schritt des Überprüfens, dass die Transaktionsverarbeitungskomponente, die die Transaktion validieren möchte, der Transaktionsverarbeitungskomponente entspricht, die zuvor bei dem Zahlungsserver identifiziert wird.

2. Verfahren zum Verarbeiten nach Anspruch 1, **dadurch gekennzeichnet, dass** es ferner einen Schritt des Erhaltens (120) eines Datums aufweist, das für eine Transaktionsnummer (DRNumTrans) repräsentativ ist.

3. Verfahren zum Verarbeiten nach Anspruch 1, **dadurch gekennzeichnet, dass** der Schritt des Erhaltens (110) eines Datums, das für einen Zahlungsparameter (ParPai) repräsentativ ist, einen Schritt des Suchens in einer Datenstruktur von mindestens einem Parameter aufweist, der dem Händlerserver zugeordnet wird.

4. Verfahren zum Verarbeiten nach Anspruch 1, **dadurch gekennzeichnet, dass** es ferner einen Schritt des Übertragens (130) eines Bestätigungsdatums an den Händlerserver (SerMar) aufweist.

5. Elektronisches System zum Verarbeiten von Transaktionen, das geeignet ist, ein Verarbeiten von Transaktionsdaten durchzuführen, umfassend eine Vorrichtung, die als Schnittstelle zwischen einem Händlerserver (SerMar) und einem Zahlungsserver (SerPai) fungiert, wobei die Daten für eine Zahlung zwischen einem Benutzer (U) und einem Händler (M) repräsentativ sind, System, **dadurch gekennzeichnet, dass** es aufweist:
- Mittel zum Empfangen (E1) einer Zahlungsanforderung von dem Kommunikationsendgerät des Benutzers,
- Mittel zum Überprüfen (E2) einer Anwesenheit einer Transaktionsverarbeitungskomponente des Kommunikationsendgeräts des Benutzers,
- Mittel zum Übertragen (E3) eines Datums, das das Vorhandensein der Transaktionsverarbeitungskomponente angibt, umfassend eine Kennung der Transaktionsverarbeitungskomponente,
und,
wenn die Transaktionsverarbeitungskomponente vorhanden ist, das Einsetzen:
- von Mitteln zum Empfangen (100) einer Transaktionsverarbeitungsanforderung (ReqTT) von dem Händlerserver (SerMar), wobei die Verarbeitungsanforderung eine Kennung des Händlerservers (SerMar) und die Kennung der Transaktionsverarbeitungskomponente des Kommunikationsendgeräts des Benutzers aufweist,
- der Mittel zum Erhalten (110) eines Datums, das für einen Zahlungsparameter (ParPai) repräsentativ ist, der dem Händlerserver (SerMar) zugeordnet ist, in Abhängigkeit von einer Kennung des Händlerservers (SerMar),
- der Mittel zum Übertragen (140) an den Zahlungsserver (SerPai) einer Zahlungsverarbeitungsanforderung (ReqTrtPai), umfassend die Kennung der Transaktionsverarbeitungskomponente,
- der Mittel zum Übertragen (150) an die Transaktionsverarbeitungskomponente des Kommunikationsendgeräts des Benutzers von Konfigurationsdaten, umfassend das Datum, das für einen Zahlungsparameter (ParPai) repräsentativ ist, der dem Händlerserver (SerMar) zugeordnet ist, und eines Datums, das für Anschlussparameter an den Zahlungsserver (SerPai) repräsentativ ist,
- der Mittel zum Ausführen der Zahlungstransaktion zwischen der Transaktionsverarbeitungskomponente des Kommunikationsendgeräts und dem Zahlungsserver (SerPai) in Abhängigkeit von den Daten, die während des Schritts des Übertragens empfangen sind, umfassend Mittel zum Überprüfen, dass die Transaktionsverarbeitungskomponente, die die Transaktion validieren möchte, der Transaktionsverarbeitungskomponente entspricht, die zuvor bei dem Zahlungsserver identifiziert ist.

6. Computerprogrammprodukt, das von einem Kommunikationsnetzwerk herunterladbar ist und/oder auf einem computerlesbaren Medium gespeichert ist und/oder von einem Mikroprozessor ausgeführt werden kann, **dadurch gekennzeichnet, dass** es Programmcodeanweisungen zum Ausführen eines Verfahrens zum Verarbeiten von Transaktionsdaten nach Anspruch 1 aufweist, wenn es auf einem Computer ausgeführt wird.

## Claims

1. Method for processing transactional data representing a payment between a user (U) and a merchant (M), the method being implemented by an electronic device for processing transactions situated within a communications network, said electronic device interfacing a merchant server and a payment server **characterized in that** it comprises:
- A step for receiving (E1) a payment request from a communication terminal of the user,
- A step for verifying (E2) a presence of a transaction-processing component of the user's communications terminal,
- A step for transmitting (E3), by said communication terminal, a piece of data indicating whether or not the transaction-processing component is present in the communications terminal comprising an identifier of said transaction-processing component of the user's communications terminal, and
When said transaction-processing component is present:
- a step (100) for receiving a request for processing a transaction (ReqTT) coming from said merchant server (SerMar), said request for processing comprising an identifier of said merchant server (SerMar) and said identifier of said transaction-processing component of the user's communications terminal;
- a step (110) for obtaining a piece of data representing a payment parameter (ParPai) associated with said merchant server (SerMar) as a function of said identifier of the merchant server;
- a step (140) for transmitting a request for processing payment (ReqTrtPai) to said payment server (SerPai) comprising the identifier of said transaction-processing component,
- a step for transmitting (150) to said transaction-processing component of the user's communications terminal of configuration data comprising a piece of data representing a payment parameter (ParPai) associated with said merchant server (SerMar) and of a piece of data representing parameters for connection to the payment server (SerPai),
- a step of performing the payment transaction between the transaction-processing component of the communication terminal and the payment server (SerPai), as a function of the piece of data received during the transmission step, comprising a verification step that the transaction-processing component that wishes to validate the transaction corresponds to the transaction-processing component previously identified with the payment server.

2. Method for processing according to claim 1, **characterized in that** it further comprises a step of obtaining (120) a data representative of a transaction number (DRNumTrans).

3. Method for processing according to claim 1, **characterized in that** said step for obtaining (110) a piece of data representing a payment parameter (ParPai) comprises a step of searching, within a data structure, for at least one parameter associated with said merchant server.

4. Method for processing according to claim 1 **characterized in that** it furthermore comprises a step (130) for transmitting a piece of confirmation data to the merchant server (SerMar).

5. Electronic system for processing transactions, capable of carrying out a processing of transactional data, said electronic system comprising a device interfacing a merchant server and a payment server, said data being representative of payment between a user (U) and a merchant (M), the system being **characterized in that** it comprises:
- means for receiving (E1) a payment request from a communication terminal of the user,
- means for verifying (E2) a presence of a transaction-processing component of the user's communications terminal,
- means for transmitting (E3), by said communication terminal, a piece of data indicating whether or not the transaction-processing component is present in the communications terminal comprising an identifier of said transaction-processing component of the user's communications terminal, and
When said transaction-processing component is present, the system further comprises :
- means (100) for receiving a request for processing a transaction (ReqTT) coming from said merchant server (SerMar), said request for processing comprising an identifier of said merchant server (SerMar) and said identifier of said transaction-processing component of the user's communications terminal;
- means (110) for obtaining a piece of data representing a payment parameter (ParPai) associated with said merchant server (SerMar) as a function of said identifier of the merchant server;
- means (140) for transmitting a request for processing payment (ReqTrtPai) to said payment server (SerPai) comprising the identifier of said transaction-processing component,
- means for transmitting (150) to said transaction-processing component of the user's communications terminal of configuration data comprising a piece of data representing a payment parameter (ParPai) associated with said merchant server (SerMar) and of a piece of data representing parameters for connection to the payment server (SerPai),
- means for performing the payment transaction between the transaction-processing component of the communication terminal and the payment server (SerPai), as a function of the piece of data received during the transmission step, comprising a verification step that the transaction-processing component that wishes to validate the transaction corresponds to the transaction-processing component previously identified with the payment server.

6. Computer program downloadable from a communications network and/or stored in a computer readable medium and/or executable by a microprocessor, **characterized in that** it comprises program code instructions to execute a method for processing transactional data according to claim 1 when the program is executed by a computer.
